# EUROPEAN PATENT APPLICATION

(11) **EP 2 782 422 A1**
(43) Date of publication of application: **24.09.2014**
(21) Application number: 13182761.0
(22) Date of filing: 03.09.2013
(51) Int. Cl.: H05B 33/08

(54) **Power supply circuit and illumination apparatus**

(30) Priority: 22.03.2013 JP 2013061116
(71) Applicant: Toshiba Lighting & Technology Corporation, Yokosuka-shi, Kanagawa 237-8510 (JP)
(72) Inventor: Akahoshi, Hiroshi, Kanagawa, 237-8510 (JP); Otake, Hirokazu, Kanagawa, 237-8510 (JP); Kitamura, Noriyuki, Kanagawa, 237-8510 (JP); Takahashi, Yuji, Kanagawa, 237-8510 (JP)
(74) Representative: Bokinge, Ole

(57) **Abstract**

According to one embodiment, there is provided a power supply circuit (14) including a power conversion unit (21), a current regulator (23), a controller (22), and a controller power supply (24). The power conversion unit (21) converts an AC voltage with a controlled conduction angle, supplied through a power supply path (26a), into a different voltage and supplies the converted voltage to a load (12). The current regulator (23) includes a branch path (27) connected to the power supply path (26a) and switches between a first state in which a part of a current flowing through the power supply path (26a) flows to the branch path (27) and a second state in which a current flowing to the branch path (27) is lower than that of the first state. The controller (22) detects a conduction angle of the AC voltage and controls the switching of the current regulator (23) based on the detected conduction angle. The controller power supply (24) is connected to the branch path (27), converts a supplied voltage into a driving voltage and supplies the driving voltage to the controller (22). The controller (22) switches the current regulator (23) to the second state in at least a part of a conduction period of the detected conduction angle and switches the current regulator (23) to the first state in a blocking period of the detected conduction angle.

## Description

### FIELD

Embodiments described herein relate generally to a power supply circuit and an illumination apparatus.

### BACKGROUND

In an illumination apparatus, an illumination light source is shifted from an incandescent lamp or a fluorescent lamp to a power-saving and long-life light source such as a light-emitting element including a light-emitting diode (LED). For a power supply circuit which supplies power to such a light source, the suppression of power loss is desired.

### BRIEF DESCRIPTION OF THE DRAWINGS

FIG. 1 is a block diagram schematically illustrating an illumination apparatus according to an embodiment;
FIG. 2 is a circuit diagram schematically illustrating a power supply circuit according to an embodiment;
FIGS. 3A and 3B are graphs illustrating an operation of a controller according to an embodiment;
FIGS. 4A to 4C are graphs schematically illustrating an operation of a controller according to an embodiment; and
FIGS. 5A to 5C are graphs schematically illustrating an operation of a controller according to an embodiment.

### DETAILED DESCRIPTION

According to one embodiment, there is provided a power supply circuit including a power conversion unit, a current regulator, a controller, and a controller power supply. The power conversion unit converts an AC voltage with a controlled conduction angle, supplied through a power supply path, into a different voltage and supplies the converted voltage to a load. The current regulator includes a branch path electrically connected to the power supply path and can switch between a first state in which a part of a current flowing through the power supply path flows to the branch path and a second state in which a current flowing to the branch path is lower than that of the first state. The controller detects a conduction angle of the AC voltage and controls the switching of the current regulator between the first state and the second state based on the detected conduction angle. The controller power supply is electrically connected to the branch path, converts a voltage, supplied through the branch path, into a driving voltage corresponding to the controller, and supplies the driving voltage to the controller. The controller switches the current regulator to the second state in at least a part of a conduction period of the detected conduction angle and switches the current regulator to the first state in a blocking period of the detected conduction angle.

According to another embodiment, there is provided an illumination apparatus including an illumination load and a power supply circuit. The power supply circuit supplies power to the illumination load. The power supply circuit includes a power conversion unit, a current regulator, a controller, and a controller power supply. The power conversion unit converts an AC voltage with a controlled conduction angle, supplied through a power supply path, into a different voltage and supplies the converted voltage to a load. The current regulator includes a branch path electrically connected to the power supply path and can switch between a first state in which a part of a current flowing through the power supply path flows to the branch path and a second state in which a current flowing to the branch path is lower than that of the first state. The controller detects a conduction angle of the AC voltage and controls the switching of the current regulator between the first state and the second state based on the detected conduction angle. The controller power supply is electrically connected to the branch path, converts a voltage, supplied through the branch path, into a driving voltage corresponding to the controller, and supplies the driving voltage to the controller. The controller switches the current regulator to the second state in at least a part of a conduction period of the detected conduction angle and switches the current regulator to the first state in a blocking period of the detected conduction angle.

Hereinafter, each embodiment will be described with reference to the drawings.

The drawings are schematic or conceptual, and a relationship between the thickness and the width of each portion, size ratios between portions, and the like are not necessarily limited to being the same as those of actual ones. In addition, even when the same portion is illustrated in the drawings, the dimension, ratio, and the like thereof may vary depending on the drawings.

In this specification and the respective drawings, the same elements are represented by the same reference numerals, and the description thereof will not be repeated.

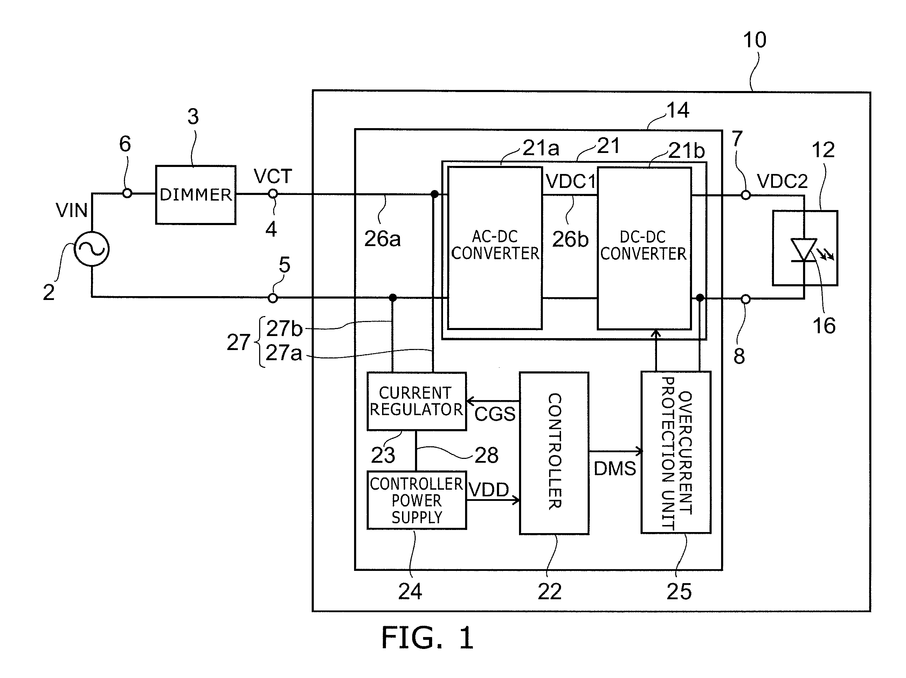

FIG. 1 is a block diagram schematically illustrating an illumination apparatus according to an embodiment.

As illustrated in FIG. 1, an illumination apparatus 10 includes an illumination load 12 (load) and a power supply circuit 14. The illumination load 12 includes an illumination light source 16 such as a light-emitting diode (LED). The illumination light source 16 may be an organic light-emitting diode (OLED) or the like. As the illumination light source 16, for example, a light-emitting element having forward voltage drop is used. The illumination load 12 turns on the illumination light source 16 by the application of an output voltage and the supply of an output current from the power supply circuit 14. Values of the output voltage and the output current are determined according to the illumination light source 16.

The power supply circuit 14 is connected to an AC power supply 2 and a dimmer 3. In this specification, "connection" refers to electrical connection and includes cases where elements are not physically connected to each other and cases where elements are connected to each other through another element.

The AC power supply 2 is, for example, a commercial power supply. The dimmer 3 generates an AC voltage VCT with a controlled conduction angle from an AC power supply voltage VIN of the AC power supply 2. The power supply circuit 14 converts the AC voltage VCT, supplied from the dimmer 3, into a DC voltage and outputs the DC voltage to the illumination load 12 to turn on the illumination light source 16. In addition, the power supply circuit 14 dims the illumination light source 16 in synchronization with the AC voltage VCT with a controlled conduction angle. The dimmer 3 is provided as necessary and may not be provided. When the dimmer 3 is not provided, the power supply voltage VIN of the AC power supply 2 is supplied to the power supply circuit 14.

Examples of a method of controlling a conduction angle using the dimmer 3 include phase control (leading edge control) of controlling a conduction phase in a period from a zero-cross point of an AC voltage to a point at which an absolute value of the AC voltage is maximum; and reverse phase control (trailing edge control) of controlling a blocking phase in a period from a point at which an absolute value of an AC voltage is maximum to a zero-cross point of the AC voltage.

The phase control dimmer 3 has the following characteristics, for example. The circuit configuration is simple, and a relatively high electrical load can be handled. However, when a triac is used, a low-load operation is difficult to perform. Therefore, when so-called power supply dipping in which a power supply voltage is temporarily decreased occurs, the operation is likely to be unstable. In addition, when a capacitive load is connected, an inrush current is generated. Therefore, compatibility with a capacitive load is low.

On the other hand, the reverse phase control dimmer 3 has the following characteristics, for example. The operation can be performed at a low load; even when a capacitive load is connected, an inrush current is not generated; and even when power supply dipping occurs, the operation is stable. However, since the circuit configuration is complicated and the temperature is likely to rise, the reverse phase control dimmer 3 is not suitable to a high load. In addition, when an inductive load is connected, a surge is generated.

In this embodiment, a configuration in which the dimmer 3 is connected in series between terminals 4 and 6 of a pair of power supply lines through which the power supply voltage VIN is supplied is described as an example. However, other configurations may also be adopted.

The power supply circuit 14 includes a power conversion unit 21, a controller 22, a current regulator 23, a controller power supply 24, and an overcurrent protection unit 25.

The power conversion unit 21 converts the AC voltage VCT with a controlled conduction angle, supplied through a first power supply path 26a, into a different voltage and supplies the converted voltage to the illumination load 12. The power conversion unit 21 includes an AC-DC converter 21a and a DC-DC converter 21b. The AC-DC converter 21a converts the AC voltage VCT, supplied through the first power supply path 26a, into a first DC voltage VDC1.

The DC-DC converter 21b is connected to the AC-DC converter 21a through a second power supply path 26b. The DC-DC converter 21b converts the first DC current VDC1, supplied from the second power supply path 26b, into a second DC voltage VDC2 having a predetermined voltage value corresponding to the illumination load 12; and supplies the second DC voltage VDC2 to the illumination load 12. The absolute value of the second DC voltage VDC2 is different from the absolute value of the first DC voltage VDC1. For example, the absolute value of the second DC voltage VDC2 is lower than the absolute value of the first DC voltage VDC1. In this example, the DC-DC converter 21b is a step-down converter. By the supply of the second DC voltage VDC2, the illumination light source 16 of the illumination load 12 is turned on.

The current regulator 23 includes a branch path 27 electrically connected to the first power supply path 26a and switches between a first state in which a part of a current flowing to the first power supply path 26a flows to the branch path 27 and a second state in which a current flowing through the branch path 27 is lower than that of the first state. As a result, the current regulator 23 regulates, for example, a current flowing to the first power supply path 26a. The branch path 27 includes, for example, a first branch line 27a that is connected to an input terminal 4; and a second branch line 27b that is connected to an input terminal 5. In the second state, for example, a current does not substantially flow to the branch path 27. For example, the first state is the conduction state, and the second state is the non-conduction state. In the second state, a small current which has no effect on the operation may flow to the branch path 27. The branch path 27 may be connected to, for example, the second power supply path 26b.

The controller power supply 24 includes a distribution unit 28 that is connected to the current regulator 23. The controller power supply 24 converts a voltage, input through the current regulator 23 and the distribution unit 28, into a DC driving voltage VDD corresponding to the controller 22; and supplies the driving voltage VDD to the controller 22.

The controller 22 detects a conduction angle of the AC voltage VCT. The controller 22 generates a dimming signal DMS corresponding to the detected conduction angle and inputs the dimming signal DMS to the overcurrent protection unit 25. In addition, the controller 22 generates a control signal CGS according to the detected conduction angle and inputs the control signal CGS to the current regulator 23. As a result, the controller 22 controls the switching of the current regulator 23 between the first state and the second state. In this way, by controlling the current regulator 23 and the overcurrent protection unit 25 according to the detected conduction angle, the controller 22 dims the illumination light source 16 in synchronization with the conduction angle control of the dimmer 3. As the controller 22, for example, a microprocessor may be used.

The overcurrent protection unit 25 is connected to an output terminal 8 of the power supply circuit 14 on the low potential side. That is, the overcurrent protection unit 25 is connected to an end of the illumination load 12 on the low potential side. The overcurrent protection unit 25 detects a current flowing to the illumination load 12 (illumination light source 16). The overcurrent protection unit 25 performs feedback control of the DC-DC converter 21b based on the dimming signal DMS input from the controller 22 and the detected current. For example, when an overcurrent flows to the illumination light source 16, the overcurrent protection unit 25 performs the feedback control of the DC-DC converter 21b to decrease the current. As a result, the overcurrent protection unit 25 inhibits an overcurrent from flowing to the illumination light source 16.

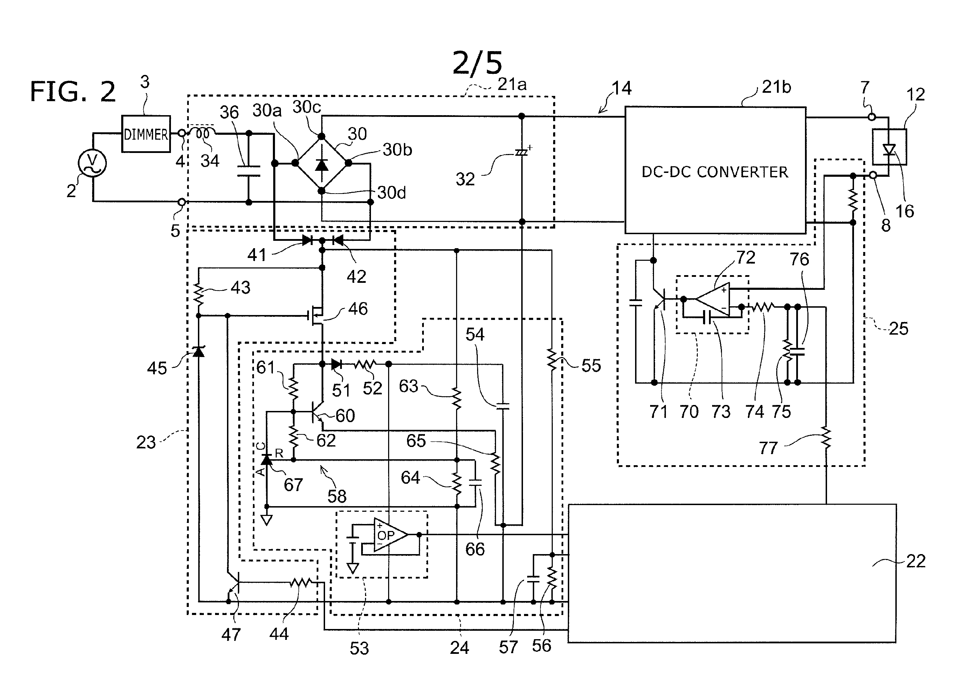

FIG. 2 is a circuit diagram schematically illustrating a power supply circuit according to an embodiment.

As illustrated in FIG. 2, the AC-DC converter 21a includes a rectifier circuit 30, a smoothing capacitor 32, an inductor 34, and a filter capacitor 36.

The rectifier circuit 30 is, for example, a diode bridge. Input terminals 30a and 30b of the rectifier circuit 30 are connected to a pair of the input terminals 4 and 5. The AC voltage VCT subjected to phase control or reverse phase control by the dimmer 3 is input to the input terminals 30a and 30b of the rectifier circuit 30. For example, the rectifier circuit 30 performs full-wave rectification on the AC voltage VCT and generates a ripple voltage after the full-wave rectification between a high potential terminal 30c and a low potential terminal 30d.

The smoothing capacitor 32 is connected between the high potential terminal 30c and the low potential terminal 30d of the rectifier circuit 30. The smoothing capacitor 32 smoothes a ripple voltage which is rectified by the rectifier circuit 30. As a result, the first DC current VDC1 appears on both ends of the smoothing capacitor 32.

The inductor 34 is connected to the input terminal 4 in series. For example, the inductor 34 is connected to the first power supply path 26a in series. The filter capacitor 36 is connected between the input terminals 4 and 5. For example, the filter capacitor 36 is connected to the first power supply path 26a in parallel. The inductor 34 and the filter capacitor 36 remove noise which is included in, for example, the AC voltage VCT.

The DC-DC converter 21b is connected to both ends of the smoothing capacitor 32. As a result, the first DC voltage VDC1 is input to the DC-DC converter 21b. The DC-DC converter 21b converts the first DC voltage VDC1 into the second DC voltage VDC2 having a different absolute value and outputs the second DC voltage VDC2 to output terminals 7 and 8 of the power supply circuit 14. The illumination load 12 is connected to the output terminals 7 and 8. The illumination load 12 turns on the illumination light source 16 through the second DC voltage VDC2 supplied from the power supply circuit 14.

For example, the current regulator 23 includes rectifying devices 41 and 42, resistors 43 and 44, a zener diode 45, and switching devices 46 and 47.

The rectifying devices 41 and 42 are, for example, diodes. An anode of the rectifying device 41 is connected to the input terminal 30a of the rectifier circuit 30 through the first branch line 27a. An anode of the rectifying device 42 is connected to the input terminal 30b of the rectifier circuit 30 through the second branch line 27b.

As the switching device 46, for example, FET or GaN-HEMT may be used. In the following description, the switching device 46 is assumed as FET. In addition, in this example, the switching device 46 is normally-off type. The switching device 46 may also be normally-on type.

A drain of the switching device 46 is connected to a cathode of the rectifying device 41 and a cathode of the rectifying device 42. That is, the drain of the switching device 46 is connected to the first power supply path 26a through the rectifying devices 41 and 42. A gate of the switching device 46 is connected to an end of the resistor 43 and a cathode of the zener diode 45. The other end of the resistor 43 is connected to the cathode of the rectifying device 41 and the cathode of the rectifying device 42. An anode of the zener diode 45 is connected to the low potential terminal 30d of the rectifier circuit 30.

Along with the application of the AC voltage VCT, a current having one polarity flows to the drain of the switching device 46 through the rectifying device 41. Along with the application of the AC voltage VCT, a current having the other polarity flows to the drain of the switching device 46 through the rectifying device 42. As a result, a ripple voltage after the full-wave rectification of the AC voltage VCT is applied to the drain of the switching device 46.

A ripple voltage is applied to the cathode of the zener diode 45 through the resistor 43 and the respective rectifying devices 41 and 42. As a result, a substantially constant voltage corresponding to a breakdown voltage of the zener diode 45 is applied to the gate of the switching device 46. Accordingly, a substantially constant current flows between the drain and a source of the switching device 46. In this way, the switching device 46 functions as a constant current device. For example, the switching device 46 regulates a current flowing to the branch path 27.

In this example, the switching device 47 is an npn transistor. The switching device 47 is normally-off type. For example, the switching device 47 may be FET or GaN-HEMT. The switching device 47 may also be normally-on type.

A collector of the switching device 47 is connected to the gate of the switching device 46. An emitter of the switching device 47 is connected to the low potential terminal 30d of the rectifier circuit 30. A base of the switching device 47 is connected to an end of the resistor 44. The other end of the resistor 44 is connected to the controller 22. That is, the base of the switching device 47 is connected to the controller 22 through the resistor 44.

The controller 22 inputs the control signal CGS to the base of the switching device 47. For example, by switching the control signal CGS, input from the controller 22, from Lo to Hi, the switching device 47 is switched from the off state to the on state.

When the switching device 47 is switched on, the gate of the switching device 46 is set to a potential of the low potential terminal 30d of the rectifier circuit 30. As a result, the switching device 46 is switched off. That is, by switching on the switching device 47, the current regulator 23 is switched to the second state; and by switching off the switching device 47, the current regulator 23 is switched to the first state.

For example, the controller power supply 24 includes a rectifying device 51, a resistor 52, a regulator 53, and a backup capacitor (capacitor) 54.

An anode of the rectifying device 51 is connected to the source of the switching device 46. A cathode of the rectifying device 51 is connected to an end of the resistor 52. The other end of the resistor 52 is connected to an input terminal of the regulator 53. In addition, the other end of the resistor 52 is also connected to an end of the backup capacitor 54. The other end of the backup capacitor 54 is connected to the low potential terminal 30d of the rectifier circuit 30. An output terminal of the regulator 53 is connected to the controller 22.

When the current regulator 23 is in the first state, a ripple voltage is input from the first power supply path 26a to the backup capacitor 54 through the switching device 46, the rectifying device 51, and the resistor 52, thereby charging the backup capacitor 54. The backup capacitor 54 may be charged by the smoothing capacitor 32. At the same time, a substantially DC voltage, which is obtained by the backup capacitor 54 smoothing a ripple voltage from the first power supply path 26a, is input to the regulator 53. The regulator 53 generates the substantially constant DC driving voltage VDD from the input DC voltage and outputs the driving voltage VDD to the controller 22. As a result, the driving voltage VDD is supplied to the controller 22. In this way, the backup capacitor 54 is connected in parallel to an output path through which the driving voltage VDD is output to the controller 22; and smoothes the driving voltage VDD.

In addition, when the current regulator 23 is switched from the first state to the second state, charges accumulated in the backup capacitor 54 are supplied to the regulator 53. As a result, when the current regulator 23 is in the second state, the controller 22 may be temporarily driven by the charges accumulated in the backup capacitor 54. The capacity of the backup capacitor 54 is, for example, approximately 10 µF to 20 µF.

On the controller power supply 24, resistors 55 and 56 and a capacitor 57 are further provided. An end of the resistor 55 is connected to the respective cathodes of the rectifying devices 41 and 42. The other end of the resistor 55 is connected to an end of the resistor 56. The other end of the resistor 56 is connected to the low potential terminal 30d of the rectifier circuit 30. The capacitor 57 is connected to the resistor 56 in parallel. A connection point between the resistors 55 and 56 is connected to the controller 22. As a result, a voltage corresponding to a voltage dividing ratio of the resistors 55 and 56 is input to the controller 22 as a detection voltage for detecting the absolute value of the AC voltage VCT.

For example, based on the detection voltage, the controller 22 detects whether the conduction angle of the AC voltage VCT is controlled or not; and the type of the conduction angle control (phase control or reverse phase control). When the conduction angle is controlled, the controller 22 detects the conduction angle. Based on the detection result, the controller 22 generates the dimming signal DMS and inputs the dimming signal DMS to the overcurrent protection unit 25. For example, the controller 22 inputs a PWM signal corresponding to the detected conduction angle to the overcurrent protection unit 25 as the dimming signal DMS.

In addition, a constant power circuit 58 is provided on the controller power supply 24. For example, the constant power circuit 58 includes a semiconductor device 60, resistors 61 to 65, a capacitor 66, and a shunt regulator 67. In this example, the semiconductor device 60 is an n-p-n transistor. The semiconductor device 60 is normally-off type. As the semiconductor device 60, for example, FET or GaN-HEMT may be used. The semiconductor device 60 may also be normally-on type.

A collector of the semiconductor device 60 is connected to the source of the switching device 46. A base of the semiconductor device 60 is connected to an end of the resistor 61, an end of the resistor 62, and a cathode of the shunt regulator 67. An emitter of the semiconductor device 60 is connected to an end of the resistor 65. The other end of the resistor 61 is connected to the collector of the semiconductor device 60. The other end of the resistor 62 is connected to a reference terminal of the shunt regulator 67. The other end of the resistor 65 is connected to the low potential terminal 30d of the rectifier circuit 30.

An end of the resistor 63 is connected to the respective cathodes of the rectifying devices 41 and 42. The other end of the resistor 63 is connected to an end of the resistor 64. The other end of the resistor 64 is connected to the low potential terminal 30d of the rectifier circuit 30. A connection point between the resistor 63 and the resistor 64 is connected to the reference terminal of the shunt regulator 67. As a result, a voltage, which is obtained by the resistors 63 and 64 dividing a ripple voltage from the first power supply path 26a, is input to the reference terminal of the shunt regulator 67 as a reference voltage. The capacitor 66 is connected to the resistor 64 in parallel. An anode of the shunt regulator 67 is connected to the low potential terminal 30d of the rectifier circuit 30.

In the controller power supply 24, a base potential of the semiconductor device 60 changes depending on the ripple voltage which is input to the reference terminal of the shunt regulator 67. That is, the base potential of the semiconductor device 60 changes depending on the root-mean-square of the AC voltage VCT. For example, when the absolute value of the AC voltage VCT is maximum, the base potential of the semiconductor device 60 is maximum.

When the base potential of the semiconductor device 60 increases, a collector current of the semiconductor device 60 increases, and a source potential of the switching device 46 increases. That is, the controller power supply 24 changes the source potential of the switching device 46 depending on the absolute value of the AC voltage VCT. Since a gate potential of the switching device 46 is substantially constant, a drain current of the switching device 46 can be changed by changing the source potential. Specifically, by increasing the source potential, the drain current decreases; and by reducing the source potential, the drain current increases.

Accordingly, when the absolute value of the AC voltage VCT is high, the drain current of the switching device 46 decreases; and when the absolute value of the AC voltage VCT is low, the drain current of the switching device 46 increases.

In this way, the constant power circuit 58 decreases a current flowing to the branch path 27 along with an increase in the absolute value of the AC voltage VCT and increases a current flowing to the branch path 27 along with a decrease in the absolute value of the AC voltage VCT. As a result, for example, the power consumed in the controller power supply 24 can be made substantially constant. The power being substantially constant refers to the state in which the power consumed in the controller power supply 24 is within a predetermined error range.

The overcurrent protection unit 25 includes a differential amplifier circuit 70 and a semiconductor device 71. In this example, the semiconductor device 71 is an npn transistor. The semiconductor device 71 is normally-off type. The semiconductor device 71 may be, for example, a pnp transistor or FET. The semiconductor device 71 may also be normally-on type.

For example, the differential amplifier circuit 70 includes an operational amplifier 72 and a capacitor 73. The capacitor 73 is connected between an output terminal of the operational amplifier 72 and an inverted input terminal of the operational amplifier 72.

A non-inverted input terminal of the operational amplifier 72 is connected to the output terminal 8. That is, the non-inverted input terminal of the operational amplifier 72 is connected to an end of the illumination load 12 on the low potential side. As a result, a current flowing to the illumination light source 16 can be detected. When a light-emitting element such as an LED is used as the illumination light source 16, a voltage of the illumination light source 16 is substantially constant according to forward voltage drop. Accordingly, when a light-emitting element such as an LED is used as the illumination light source 16, a current flowing to the illumination light source 16 can be appropriately detected by the connection to the end of the illumination load 12 on the low potential side.

The inverted input terminal of the operational amplifier 72 is connected to an end of a resistor 74. The other end of the resistor 74 is connected to an end of a resistor 75, an end of a capacitor 76, and an end of a resistor 77. The other end of the resistor 75 and the other end of the capacitor 76 are connected to the low potential terminal 30d of the rectifier circuit 30. The other end of the resistor 77 is connected to the controller 22. In this way, the inverted input terminal of the operational amplifier 72 is connected to the controller 22 through the resistors 74 and 77. The dimming signal DMS is input from the controller 22 to the inverted input terminal of the operational amplifier 72.

For example, a DC voltage, which is obtained by the capacitor 76 smoothing the PWM signal, is input to the inverted input terminal of the operational amplifier 72 as the dimming signal DMS. For example, a DC voltage corresponding to a dimming degree of the dimmer 3 is input to the inverted input terminal of the operational amplifier 72 as the dimming signal DMS. A voltage level of the dimming signal DMS is set according to a voltage level of the detection voltage which is input to the non-inverted input terminal. More specifically, for example, a voltage level of the dimming signal DMS corresponding to a desired dimming degree is set so as to be substantially the same as a voltage level of the detection voltage of a case where the illumination light source 16 emits light with a luminance corresponding to the dimming degree.

In this way, the detection voltage corresponding to a current flowing to the illumination light source 16 is input to the non-inverted input terminal of the operational amplifier 72, and the dimming signal DMS is input to the inverted input signal of the operational amplifier 72. As a result, a signal corresponding to a difference between the detection voltage and the dimming signal DMS is output from the output terminal of the operational amplifier 72. As the detection voltage becomes higher than the dimming signal DMS, an output of the operational amplifier 72 increases. That is, when an overcurrent flows to the illumination light source 16, the output of the operational amplifier 72 increases. In this way, in this example, the dimming signal DMS is used as a reference value. When dimming is not performed, a substantially constant DC voltage which is a reference value may be input to the inverted input terminal of the operational amplifier 72.

A collector of the semiconductor device 71 is connected to the DC-DC converter 21b. An emitter of the semiconductor device 71 is connected to the low potential terminal 30d of the rectifier circuit 30. A base of the semiconductor device 71 is connected to the output terminal of the operational amplifier 72. As a result, a collector current of the semiconductor device 71 is controlled by the output from the operational amplifier 72.

As described above, when the detection voltage is higher than the dimming signal DMS, the output of the operational amplifier 72 increases. Accordingly, for example, when the detection voltage is higher than the dimming signal DMS, the semiconductor device 71 is switched on; and when the detection voltage is lower than or equal to the dimming signal DMS, the semiconductor device 71 is switched off. For example, as the detection voltage becomes higher than the dimming signal DMS, the collector current of the semiconductor device 71 increases.

When the semiconductor device 71 is switched on, the DC-DC converter 21b stops the power supply to the illumination load 12. As a result, an overcurrent can be inhibited from flowing to the illumination light source 16.

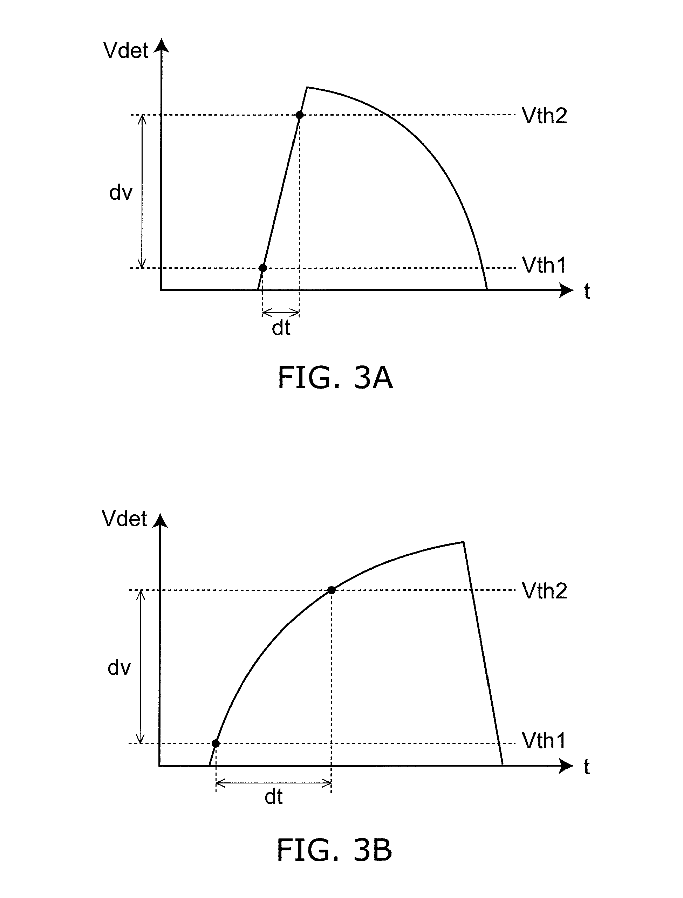

FIGS. 3A and 3B are graphs illustrating an operation of a controller according to an embodiment.

For example, the controller 22 is activated in response to the supply of the driving voltage VDD from the controller power supply 24 and determines the control type of the dimmer 3 based on the detection voltage.

In FIGS. 3A and 3B, the horizontal axis represents the time (t); and the vertical axis represents the detection voltage Vdet.

FIG. 3A illustrates a waveform example of the detection voltage Vdet when the AC voltage VCT is supplied from the phase control dimmer 3.

FIG. 3B illustrates a waveform example of the detection voltage Vdet when the AC voltage VCT is supplied from the reverse phase control dimmer 3.

As illustrated in FIGS. 3A and 3B, the controller 22 sets a first threshold voltage Vth1 and a second threshold voltage Vth2 for the detection voltage Vdet. The absolute value of the second threshold voltage Vth2 is higher than the absolute value of the first threshold voltage Vth1. The first threshold voltage Vth1 is, for example, approximately 1 V. The second threshold voltage Vth2 is, for example, approximately 3 V.

The controller 22 keeps a time dt until the detection voltage Vdet reaches the second threshold voltage Vth2 after the detection voltage Vdet reaches the first threshold voltage Vth1. The controller 22 acquires a gradient dV/dt from a difference dV between the first threshold voltage Vth1 and the second threshold voltage Vth2; and the time dt. The controller 22 determines whether the gradient dV/dt is higher than or equal to a predetermined value; determines the type of the conduction angle control as phase control when the gradient dV/dt is higher than or equal to the predetermined value; and determines the type of the conduction angle control as reverse phase control when the gradient dV/dt is lower than the predetermined value. In order to keep the time dt, for example, an internal clock may be used, or a timer or the like may be provided outside the apparatus.

The controller 22 regularly performs the determination until the input of the power supply voltage VIN or the AC voltage VCT stops. The determination may be performed, for example, on a half-wave basis of the power supply voltage VIN or the AC voltage VCT or on a half-wave basis of a predetermined number.

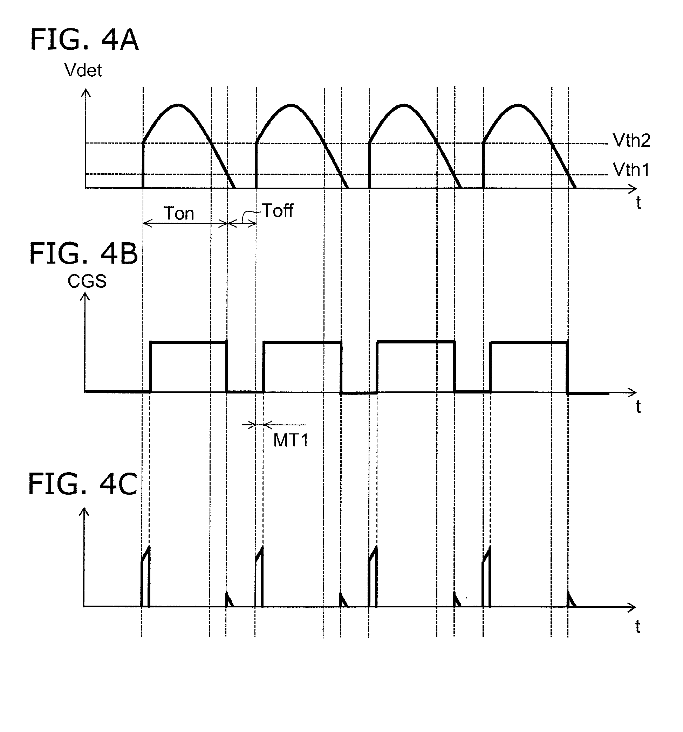

FIGS. 4A to 4C are graphs illustrating an operation of a controller according to an embodiment.

FIGS. 4A to 4C illustrate an operation example of the controller 22 when the type of the conduction angle control is determined as phase control.

In FIGS. 4A to 4C, the horizontal axis represents the time t.

In FIG. 4A, the vertical axis represents the detection voltage Vdet.

In FIG. 4B, the vertical axis represents a voltage value of the control signal CGS.

In FIG. 4C, the vertical axis represents a voltage which is input to the controller power supply 24.

As illustrated in FIGS. 4A to 4C, when the controller 22 determines the type of the conduction angle control as phase control, the controller 22 detects the conduction angle of the AC voltage VCT based on the determination result. For example, the controller 22 determines a period in which the detection voltage Vdet is higher than or equal to the first threshold voltage Vth1 as a conduction period Ton for the conduction angle control of the dimmer 3. In addition, the controller 22 determines a period in which the detection voltage Vdet is lower than the first threshold voltage Vth1 as a blocking period Toff for the conduction angle control of the dimmer 3. As a result, the controller 22 detects the conduction angle of the AC voltage VCT based on a ratio of the conduction period Ton and the blocking period Toff. The conduction angle may be detected based on the second threshold voltage Vth2. The conduction angle may be detected based on a threshold different from the first threshold voltage Vth1 and the second threshold voltage Vth2.

After detecting the conduction angle of the AC voltage VCT, the controller 22 generates the dimming signal DMS with a duty ratio corresponding to the conduction angle and inputs the generated dimming signal DMS to the overcurrent protection unit 25. As a result, the illumination light source 16 is dimmed according to the AC voltage VCT of which the conduction angle is controlled by phase control.

In addition, when a value of the detection voltage Vdet is lower than the first threshold voltage Vth1, the controller 22 sets the control signal CGS as Lo. That is, the controller 22 switches off the switching device 47 and switches the current regulator 23 to the first state. When a value of the detection voltage Vdet is higher than or equal to the first threshold voltage Vth1, the controller 22 sets the control signal CGS as Hi. That is, the controller 22 switches on the switching device 47 and switches the current regulator 23 to the second state. In other words, when the AC voltage VCT is lower than a predetermined value, the controller 22 switches the current regulator 23 to the first state; and when the AC voltage VCT is higher than or equal to the predetermined value, the controller 22 switches the current regulator 23 to the second state.

In addition, when the type of the conduction angle control is determined as phase control, the controller 22 delays a time when the current regulator 23 is switched from the first state to the second state to be slower by a first micro time MT1 than a time when a voltage value of the detection voltage Vdet is switched from the state of being lower than the first threshold voltage Vth1 to the state of being higher than or equal to the first threshold voltage Vth1.

For example, it is assumed that a triac is used for the dimmer 3 which performs the conduction angle control using phase control; and an LED is used as the illumination light source 16. A consumption current of the LED is lower than that of an incandescent lamp or the like. Therefore, unless the above-described operation is performed, a holding current, which is required for turning on the triac when the AC voltage VCT is lower than or equal to a predetermined value, cannot flow. Therefore, the operation of the dimmer 3 may be unstable.

On the other hand, in the power supply circuit 14 according to the embodiment, by controlling the operation of the current regulator 23 as described above, the holding current, which is required for turning on the triac when the AC voltage VCT is lower than or equal to a predetermined value, can flow to the current regulator 23 (to the branch path 27). As a result, the operation of the dimmer 3 can be stabilized. In addition, by delaying the switching time of the current regulator 23 by the first micro time MT1, the operation of the dimmer 3 can be further stabilized.

When the current regulator 23 is in the second state, the power is not supplied to the controller power supply 24. Accordingly, when the type of the conduction angle control is determined as phase control, the power is not supplied to the controller power supply 24 in a period obtained by decreasing the conduction period Ton by the first micro time MT1. In this way, when the type of the conduction angle control is determined as phase control, the controller 22 switches the current regulator 23 to the second state and decreases the power supply to the controller power supply 24 in at least a part of the conduction period Ton. For example, the controller 22 stops the power supply to the controller power supply 24.

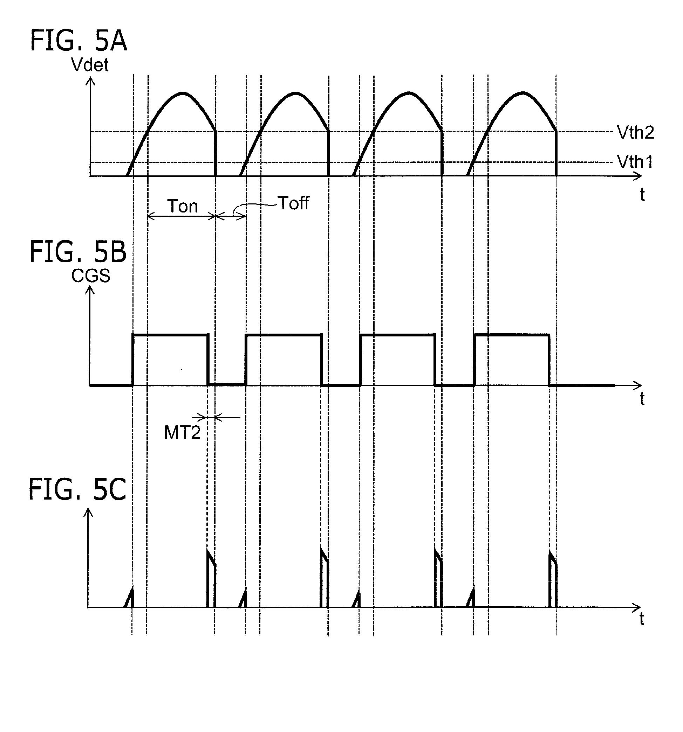

When the type of the conduction angle control is determined as phase control, in the blocking period Toff and the period of the first micro time MT1, a voltage is input to the regulator 53 and the backup capacitor 54; and the regulator 53 operates due to the input voltage. On the other hand, in the remaining period (period obtained by subtracting the first micro time MT1 from the conduction time Ton), the regulator 53 operates due to charges accumulated in the backup capacitor 54. FIGS. 5A to 5C are graphs schematically illustrating an operation of a controller according to an embodiment. FIGS. 5A to 5C illustrate an operation example of the controller 22 when the type of the conduction angle control is determined as reverse phase control.

The horizontal axis and the vertical axis of FIGS. 5A to 5C are the same as those of FIGS. 4A to 4C.

As illustrated in FIGS. 5A to 5C, when the controller 22 determines the type of the conduction angle control as reverse phase control, first, the controller 22 also detects the conduction angle of the AC voltage VCT. For example, the controller 22 determines a period in which the detection voltage Vdet is higher than or equal to the first threshold voltage Vth1 as a conduction period Ton for the conduction angle control of the dimmer 3. In addition, the controller 22 determines a period in which the detection voltage Vdet is lower than the first threshold voltage Vth1 as a blocking period Toff for the conduction angle control of the dimmer 3. As a result, the controller 22 detects the conduction angle of the AC voltage VCT based on a ratio of the conduction period Ton and the blocking period Toff.

After detecting the conduction angle of the AC voltage VCT, the controller 22 generates the dimming signal DMS with a duty ratio corresponding to the conduction angle and inputs the generated dimming signal DMS to the overcurrent protection unit 25. As a result, the illumination light source 16 can be dimmed according to the AC voltage VCT of which the conduction angle is controlled by reverse phase control.

When a value of the detection voltage Vdet is lower than the first threshold voltage Vth1, the controller 22 sets the control signal CGS as Lo and switches the current regulator 23 to the first state. When a value of the detection voltage Vdet is higher than or equal to the first threshold voltage Vth1, the controller 22 sets the control signal CGS as Hi and switches the current regulator 23 to the second state.

In addition, when the type of the conduction angle control is determined as reverse phase control, the controller 22 advances a time when the current regulator 23 is switched from the second state to the first state to be faster by a second micro time MT2 than a time when a voltage value of the detection voltage Vdet is switched from the state of being higher than or equal to the first threshold voltage Vth1 to the state of being lower than the first threshold voltage Vth1.

For example, the controller 22 stores a time of the half-wave conduction period Ton which is detected in the previous cycle; and switches the current regulator 23 from the second state to the first state at a time which is faster by the second micro time MT2 than the time of the half-wave conduction period Ton.

In reverse phase control, due to the effect of charges accumulated in the filter capacitor 36 or the like, the conduction period Ton may be longer than the actual conduction period of the dimmer 3. When the conduction period Ton is longer than the actual conduction period, for example, the duty ratio of the dimming signal DMS changes; and the dimming degree of the illumination light source 16 changes.

By setting the current regulator 23 to the first state and causing a part of a current flowing through the first power supply path 26a to flow to the branch path 27, the charges accumulated in the filter capacitor 36 or the like can be drawn to the current regulator 23. As a result, in the power supply circuit 14, the conduction angle of the AC voltage VCT subjected to reverse phase control can be more reliably detected. The illumination light source 16 can be dimmed with higher precision. In addition, as described above, by advancing the switching time of the current regulator 23 by the second micro time MT2, the charges accumulated in the filter capacitor 36 or the like can be more appropriately drawn. The detection precision of the conduction angle can be further enhanced.

When the type of the conduction angle control is determined as reverse phase control, the power is not supplied to the controller power supply 24 in a period obtained by decreasing the conduction period Ton by the second micro time MT2. In this way, when the type of the conduction angle control is determined as reverse phase control, the controller 22 switches the current regulator 23 to the second state and decreases the power supply to the controller power supply 24 in at least a part of the conduction period Ton. For example, the controller 22 stops the power supply to the controller power supply 24.

When the type of the conduction angle control is determined as reverse phase control, in the blocking period Toff and the period of the second micro time MT2, a voltage is input to the regulator 53 and the backup capacitor 54; and the regulator 53 operates due to the input voltage. On the other hand, in the remaining period (period obtained by subtracting the second micro time MT2 from the conduction time Ton), the regulator 53 operates due to charges accumulated in the backup capacitor 54.

For example, it is assumed that there is a power supply circuit which supplies power to a controller power supply in all the phases of an AC voltage. In such a power supply circuit, a current flows to the controller power supply, for example, even in a phase angle period which is unnecessary for dimming; and the power loss of the power supply circuit is huge.

On the other hand, in the power supply circuit 14 according to the embodiment, the conduction angle of the AC voltage VCT is detected; and the power supply to the controller power supply 24 is decreased in at least a part of the conduction period Ton of the detected conduction angle. In addition, at least when the AC voltage VCT is switched from the conduction period Ton to the blocking period Toff, the power is supplied to the controller power supply 24. As a result, in the power supply circuit 14, power loss can be suppressed. In addition, by suppressing power loss, heat generation of the power supply circuit 14 can be suppressed.

In addition, in the power supply circuit 14, in the case of phase control, the backup capacitor 54 is charged with a current for causing the holding current to flow to the triac of the dimmer 3; and in the case of reverse phase control, the backup capacitor 54 is charged with a current for drawing charges from the filter capacitor 36 or the like. As a result, power loss can be more appropriately suppressed.

In addition, in the power supply circuit 14, the constant power circuit 58 is provided on the controller power supply 24 such that power consumed in the controller power supply 24 is made to be substantially constant. As a result, for example, when an input voltage is high (when the absolute value of the AC voltage VCT is high), an increase in power loss can be suppressed. The power loss of the power supply circuit 14 can be more appropriately suppressed. The constant power circuit 58 is not limited to the above-described circuit and may be any circuit capable of making the power consumed in the controller power supply 24 substantially constant.

Hereinbefore, the embodiments are described using the specific examples. However, the embodiments are not limited thereto, and various modifications can be made.

The illumination light source 16 is not limited to an LED. For example, organic electro-luminescence (organic EL) or organic light-emitting diode (OLED) may be used. In the illumination load 12, plural illumination light sources 16 may be connected to each other in series or in parallel.

In the above-described embodiments, the illumination load 12 is described as a load. However, the load is not limited thereto. For example, a heater or other loads may be used. In the above-described embodiments, the power supply circuit 14 which is used for the illumination apparatus 10 is described as a power supply circuit. However, the power supply circuit is not limited thereto. For example, any power supply circuit corresponding to a load may be used. In addition, a voltage which is supplied to a load is not limited to a DC voltage. For example, an AC voltage or a ripple voltage may be used.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A power supply circuit (14) comprising:
a power conversion unit (21) that converts an AC voltage with a controlled conduction angle, supplied through a power supply path (26a), into a different voltage and supplies the converted voltage to a load (12);
a current regulator (23) that includes a branch path (27) electrically connected to the power supply path (26a) and can switch between a first state in which a part of a current flowing through the power supply path (26a) flows to the branch path (27) and a second state in which a current flowing to the branch path (27) is lower than that of the first state;
a controller (22) that detects a conduction angle of the AC voltage and controls the switching of the current regulator (23) between the first state and the second state based on the detected conduction angle; and
a controller power supply (24) that is electrically connected to the branch path (27), converts a voltage, supplied through the branch path (27), into a driving voltage corresponding to the controller (22), and supplies the driving voltage to the controller (22),
the controller (22) switching the current regulator (23) to the second state in at least a part of a conduction period of the detected conduction angle and switching the current regulator (23) to the first state in a blocking period of the detected conduction angle.

2. The circuit (14) according to claim 1,
wherein the controller power supply (24) includes a capacitor (54) that is connected in parallel to an output path through which the driving voltage is output to the controller (22) and that smoothes the driving voltage.

3. The circuit (14) according to claim 1 or 2,
wherein the current regulator (23) includes a switching device (46, 47) that is electrically connected to the power supply path (26a) and switches between the first state and the second state by switching on and off the switching device (46, 47).

4. The circuit (14) according to any one of claims 1 to 3,
wherein the controller power supply (24) includes a constant power circuit (58) that decreases a current flowing to the branch path (27) along with an increase in the absolute value of the AC voltage and increases a current flowing to the branch path (27) along with a decrease in the absolute value of the AC voltage.

5. An illumination apparatus (10) comprising:
an illumination load (12); and
the power supply circuit (14) according to any one of claims 1 to 4 that supplies power to the illumination load (12).
